# EUROPEAN PATENT SPECIFICATION

(11) **EP 1 919 755 B1**
(45) Date of publication and mention of the grant of the patent: **15.12.2010**
(21) Application number: 06765321.2
(22) Date of filing: 21.08.2006
(51) Int. Cl.: B62D 1/184

(54) **A STEERING COLUMN ASSEMBLY**
LENKSÄULENANORDNUNG
ENSEMBLE COLONNE DE DIRECTION

(30) Priority: 01.09.2005 GB 0517780; 01.09.2005 GB 0517781; 20.12.2005 GB 0525850
(43) Date of publication of application: 14.05.2008
(73) Proprietor: TRW Limited, Solihull, West Midlands B90 4AX (GB)
(72) Inventor: APPLEYARD, Michael, Gloucestershire GL50 2LR (GB); WARD, David, Monthmouthshire NP25 3NS (GB); WILKES, Mark, Anthony, Birmingham B38 8YW (GB)
(74) Representative: Tranter, Andrew David
(86) International application number: PCT/GB2006/003126
(87) International publication number: WO 2007/026118

(56) References cited:
- EP-A- 1 529 714
- EP-A2- 0 839 702
- WO-A-2004/089722
- WO-A-2005/037627
- FR-A1- 2 717 762
- FR-A1- 2 768 204
- GB-A- 2 116 496
- US-A- 5 655 413
- US-A- 5 722 299
- US-A- 5 921 577
- US-A1- 2002 011 725
- US-A1- 2003 221 505
- US-A1- 2004 134 301

## Description

This invention relates to improvements in steering column assemblies.

Steering column assemblies for automotive vehicles and the like are increasingly required to be adjustable for rake and, in many cases, reach. This requires the column shroud, within which the steering column is rotatably located, to be fixed to the vehicle by a clamp mechanism which can be locked and unlocked to either prevent movement or permit adjustment of the column shroud position respectively.

One common arrangement uses a column shroud which comprises an inner tubular member and an outer tubular member which telescope one inside the other to permit reach adjustment. A fixing rail welded to one of the tubes is secured to a support bracket by a releasable clamp mechanism. A simple single adjust mechanism includes a generally vertical elongate slot in the support bracket. The clamp mechanism can then move along the slot when in the unlocked position to provide rake adjustment. Reach adjustment can be achieved by providing an elongate slot in the guide rail generally parallel to the axis of the column through which the clamp mechanism passes.

The document WO 2005/037627 A1 discloses a steering column assembly comprising a steering column shroud which supports a steering shaft for a steering wheel, the column shroud comprising an inner member and an outer member, the inner member being at least partially received within the outer member, a support bracket which is fixed in position relative to a part of the vehicle, the outer member passing between two spaced apart arms of the bracket, and a clamp assembly which includes a cam mechanism movable between a locked position in which the clamp mechanism fixes the inner member and outer member in position relative to the support bracket and an unlocked position in which the clamp mechanism permits movement of at least one of the inner and outer members relative to the support bracket, and in which the clamp assembly includes a clamp pin which passes through openings in each of the two arms of the bracket, the clamp pin being provided with a first reaction member located towards one end of the pin outside of one arm of the clamp bracket and a second reaction member located towards the other end of the clamp pin outside of the other arm of the clamp bracket, both reaction members being prevented from rotating relative to the pin during use.

Other mechanisms have been proposed for clamping the tubes to the support bracket.

According to the invention there is provided a steering column assembly comprising a steering column shroud which supports a steering shaft for a steering wheel, the column shroud comprising an inner member and an outer member, the inner member being at least partially received within the outer member, a support bracket which is fixed in position relative to a part of the vehicle, the outer member passing between two spaced apart arms of the bracket, and a clamp assembly which includes a cam mechanism movable between a locked position in which the clamp assembly fixes the inner member and outer member in position relative to the support bracket and an unlocked position in which the clamp assembly permits movement of at least one of the inner and outer members relative to the support bracket, and in which the clamp assembly includes a clamp pin which passes through openings in each of the two arms of the bracket, the clamp pin being provided with a first reaction member located towards one end of the pin outside of one arm of the support bracket and a second reaction member located towards the other end of the clamp pin outside of the other arm of the support bracket such that the arms of the bracket are clamped between the reaction members so as to provide a pre-load to the bracket arms, and in which both reaction members are prevented from rotating relative to the pin during use, and the second reaction member is located at least partially within a cavity formed in a part of the cam mechanism, and a third reaction member is provided which is located at the opposite end of the clamp pin from the first reaction member and outside of the cam mechanism such that the clamp assembly is located between the third reaction member and the first reaction member.

One of the reaction members may comprise a nut which co-operates with the pin through a threaded engagement such that the pin prevents the reaction member from rotating relative to the pin. By this we may mean that the peak torque expected to be applied to the reaction member in use of the assembly is less than the prevailing torque required to rotate the reaction member relative to the pin. By this we may also mean that the reaction member may be intentionally rotated by applying a torque in excess of this peak torque. This enables the nut to be rotated during assembly to adjust the pre-load, i.e. it is adjustable.

Where one reaction member is adjustable the other may be fixed. By this we may mean that it cannot be moved relative to the pin during normal use or even for adjustment by applying abnormal loads. Of course, a common sense interpretation is required here since it is clear that any reaction member can be moved if subject to enough force.

In one arrangement, the second reaction member within the cavity may be adjustable and the first is fixed.

In another arrangement, the second reaction member within the cavity may be fixed and the first is adjustable.

The fixed reaction member may comprise a circlip, or may be prevented from movement by way of engagement with a part of the assembly other than the pin. For example, it may be keyed to the bracket or another component which is fixed relative to the bracket or the pin.

Where the adjustable reaction member comprises a nut it may have a stiff thread engagement. By this we may mean that the nut presents a high resistance against rotation when threaded onto the pin. For example, metal nuts with deformable plastic linings that grip the thread of the pin could be used. The torque required to turn the nut should exceed the maximum torque generated by the maximum tensile load applied to the pin when it is reacted by the nut. This will depend on the angle of the thread and the friction between the nut and the pin. A nylon insert may be provided inside the nut which is bitten into by the thread on the pin. The nut may be of the "self locking" type.

Of course, the nut may be a standard nut and the thread of the pin may be modified to provide a stiff thread, perhaps by coating the pin with a plastic material such as nylon or making the pin from a material that may be readily deformed as the nut is rotated.

The adjustable lock nut may engage a threaded portion of the clamp pin and may be prevented from rotation relative to the pin only by the friction inherent between the stiff thread and the thread of the pin.

The other reaction means may comprise a fixed nut or washer or any other reaction means which in use is preferably not adjustable once assembled. This means that in assembly it is only the nut with the stiff thread that is adjustable to set the load on the clamp pin. It may, for example, comprise a circlip or other fixed reaction means. This may be press fitted to the pin such that it will not slide along the pin accidentally. It may perhaps be a face defined by a step change in diameter of a cylindrical pin. If a pin having a non-circular cross section is used, a protrusion formed into the pin could be provided to define the face.

The cam mechanism may be provided towards one end of the pin comprising a fixed cam portion and a moving cam portion, the fixed portion being fixed relative to the pin and other portion movable relative to the pin.

The adjustable reaction member may be located on the clamp pin partially or wholly within a recess provided in the fixed part or the moving part of the cam mechanism. Preferably it is within the fixed part which may be keyed to the bracket to prevent it rotating. This recess where present may completely clear the reaction member so that it is only the cooperation between reaction member and pin that prevents it from moving once the pre-load has been set. For example, a fixed portion of the cam mechanism may be provided with a recess that accommodates the width of the stiff nut whilst enabling the fixed portion to be keyed to the bracket so that it does not rotate.

Alternatively, the circlip may be provided within the cam mechanism and the stiff nut provided at the other end of the clamp pin.

A spring, such as a Bellville washer may be provided between the third reaction member and the cam mechanism which determines at least in part the force required to rotate the handle. A Belleville washer is a compact type of spring in the shape of a washer that has been pressed into a dished shape and then hardened and tempered. A stack of Belleville washers may be provided. Two or more washers may be provided back to back.

The washer, or washers, may be made from spring steel.

In an alternative embodiment, one of the reaction members may comprise a nut having an external shape, the nut engaging a correspondingly shaped recess in the cam mechanism. The shape may be hexagonal, and so the nut may comprise a (standard) nut.

The inner and outer members are preferably tubular, and most preferably tubular cylindrical

The bracket may be U shaped having a base from which the arms depend. One or more upstanding portions may be provided for attaching the bracket to a fixed part of the vehicle chassis.

There will now be described, by way of example only, four embodiments of the present invention with reference to and as illustrated in the accompanying drawings of which:
**Figures 1(a) and (b)** show a first embodiment of a steering column assembly in accordance with the present invention;
**Figures 2(a) and (b)** show a second embodiment of a steering column assembly in accordance with the present invention; and
**Figure 3** shows a third embodiment of a steering column assembly in accordance with the present invention.

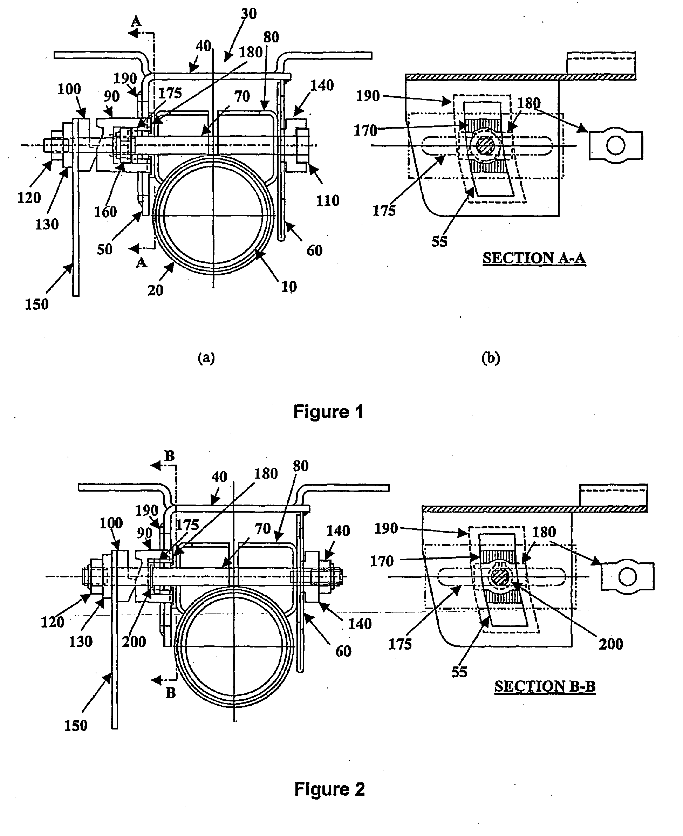

As shown in Figure 1, a steering column assembly comprises a sleeve that comprises an inner member 10 and an outer member 20 which receives a portion of the inner member 10. The inner and outer members 10,20 are of metal and tubular cylindrical with the inside diameter of the outer member 20 being only slightly greater than the outside diameter of the inner member 10 so as to permit relative movement between them by sliding. In the example, the inner member passes into a gearbox housing (not shown) whilst the outer member extends away from that towards a steering wheel as is known in the art. The wheel is supported by a telescopic steering shaft (not shown) that is free to rotate within the steering column shroud. It is located within the shroud by bearings. In other arrangements the outer shroud member may connect to the gearbox housing and the inner extend away from that.

The steering column shroud 10,20 is fixed pivotally via a gearbox housing (not shown), to a part of the vehicle body and also to a support bracket 30 secured to the body of the vehicle by a clamp mechanism. The bracket 30 is typically welded or bolted in place in a region under the dashboard and is positioned along the shroud at a point somewhere between the pivot and the steering wheel. The clamp mechanism can be locked or unlocked to allow the rake of the steering column to be adjusted by pivoting about the pivot. When locked the steering column cannot be moved other than in an accident.

The bracket 30 comprises a metal component of U shape having a base 40 and two depending arms 50,60 which extend vertically downwards from either side of the base 40. The shroud passes between the arms 50,60. The arms each include an elongate opening 55,65 through which a clamp pin 70 is provided. The pin 70 passes through openings in a guide rail 80 fixed to the top of the outer tube 20 by welding. The slots in the arms allow the position of the shroud to be adjusted for rake by permitting the clamp pin 70 to move up and down within the slots.

The pin 70 is provided with a cam locking mechanism including a fixed portion 90 and moving portion 100 being provided on the side of the fixing arm 50 opposite the guide rail 80. Towards each end of the pin 70 is provided a reaction means 110, 120. A thrust bearing 130 is also provided between the reaction means 120 and the cam. Moving the cam 100 causes a force to be exerted between the reaction means 110,120 as the pin 70 is placed in tension and this causes the arms 50,60 of the bracket 30 to be squeezed together to clamp onto the guide rail 80 attached to the outer member 20.

In more detail, the clamp pin 70 is provided with components in the following order starting at one end: thrust nut 120, thrust bearing 130, cam mechanism comprising moving portion 100 and fixed cam portion 90; one bracket arm 50, the other bracket arm 60, a reaction block 140 and a first reaction means 110. A handle 150 is attached to the moving cam portion 100 to enable it to be rotated around the clamp pin 70 by a driver.

The thrust nut 120 defines a reaction member that comprises an adjustable nut which is threaded onto an end region of the clamp pin. The moving and fixed cam portions comprise a pair of facing ramps and two opposing reaction faces. The fixed cam 90 is restrained from rotation by its engagement with the elongate slot in the bracket arm 50 as shown in Figure 1(b).

The first reaction member 110 comprises a hexagonal nut form fixed to the pin 70 and which is located within a complimentary hexagonal cut-out in the reaction block 140. The reaction block 140 is prevented from rotation by its engagement with the slot in the arm 60 of the bracket adjacent the block. This arrangement prevents the pin 70 from rotating relative to the bracket arm 60.

In use, as the moving portion 100 of the cam mechanism is rotated the ramp of the moving face slides over the ramp of the fixed portion to increase or decrease the distance between the reaction faces. The first reaction means 110 also comprises a non-adjustable nut or other fastening.

Also provided along the clamp pin 70 is a further reaction member comprising an adjustable nut 160 having a stiff thread. This is screwed onto a threaded portion of the clamp pin 70 adjacent the outside face of the clamp bracket arm nearest the cam mechanism (i.e. on the same side of the clamp bracket arm as the cam mechanism). This nut 160 provides an anti-dumping role in that its position along the pin 70 relative to the reaction means 110 at the other end of the clamp pin 70 determines the clamp force that is applied to the arms 50,60 when the cam mechanism is fully unlocked. Importantly this should be sufficient to prevent free play and provide a good feel, yet not so high as to introduce excessive friction into the assembly that could make movement of the outer tube relative to the clamp too stiff. The anti-dumping nut 160 prevents unwanted spreading of the arms in the unlocked position.

More specifically, the anti-dumping nut 160 is a thin prevailing torque nut with a stiff thread. This may be a steel or brass nut with a nylon insert as is known in the art of stiff thread nylon insert nuts. Alternatively it may be a self locking type nut. The nut 160 is located within a cavity provided in the fixed cam portion 90. By stiff thread we mean that the nut will not rotate under the loads applied to it by the clamp mechanism and will stay fixed in position after initial assembly. In the embodiment of Figure 1 a plastic pad 180 is provided between the nut and the bracket 30 to reduce the amount of friction present.

Alternatively, the stiff nut 160 could be replaced with a normal nut whose hexagonal outer form engages with a corresponding hexagonal shaped recess in the fixed cam portion 90. This nut would then be secured against unwanted rotation once the assembly of all the parts is completed.

Also shown in Figure 1(b) is a row of reach adjustment teeth 170 provided on the guide rail 80. These surround the opening 175 through which the clamp pin 70 passes. This opening 85 is elongate extending in a direction parallel to the axis of the outer tube 20. The opening permits reach adjustment of the assembly. The teeth cooperate with corresponding teeth on the fixed cam 90.

Also shown is an additional spacer plate 190 welded to the arm of the bracket which is adjacent the cam mechanism. This slot provides additional thickness to the arm at that location to ensure robust engagement with the cam fixed portion as it moves to the left when moving from the locked to unlocked position. Depending on the thickness of material used for the arm this may not be required.

An alternative embodiment is illustrated in Figures 2(a) and (b) of the accompanying drawings. For ease of reference, the same reference numerals are used in these Figures as used in Figures 1(a) and (b) where like components are shown.

In this arrangement a fixed washer or circlip 200 is provided in the location of the stiff threaded anti-dump nut. The reaction member at the other end of the clamp pin 70 is adjustable because it is no longer received in a recess in the reaction member 140. This nut is therefore the primary means to determine the amount of slack when the clamp mechanism is locked. This would also be a stiff thread nut although other types of adjustable fastener could be provided. This provides an advantage over the embodiment shown in. Figure 1 in that the adjustable nut is accessible in use. In Figure 1 it is obscured by the cam mechanism. As with Figure 1, a plastic pad may be provided between the circlip 200 and the bracket arm 50.

In an alternative embodiment (not shown) the circlip 200 may be replaced by a shoulder formed by the transition in the diameter of the pin 70 from a larger diameter (e.g. 8 mm) to the left of the plastic pad 180 to a smaller diameter (e.g. 6 mm) to the right of the left surface of the plastic pad 180.

To assist in the adjustment of the nut 110 the clamp pin has a D-shaped flat in the region that passes through the reaction block which in turn is prevented from rotation by its engagement with the slot in the arm 60 adjacent the reaction block.

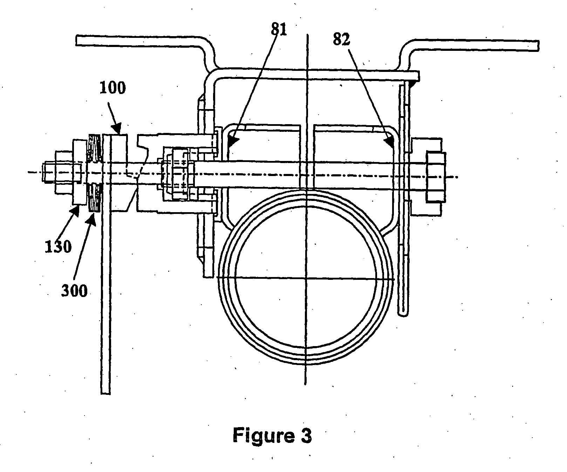

A still further embodiment is shown in Figure 3 of the accompanying drawings. Again, the same reference numerals used in Figures 1 and 2 have been used for like parts.

In this arrangement, a stack of Belleville washers 300 is provided between the moving cam portion 100 and the thrust bearing 130. The applicant has appreciated that providing these disc springs makes the clamp pin tension less susceptible to longitudinal out-of-parrallelism of the side walls 81,82 of the guide rail 80. The washers 300 provide compliance to the clamp bolt assembly without which the cam mechanism is purely generating a displacement of the fixed cam rather than a desired clamping force. This arrangement reduces the effects of manufacturing tolerances on the clamping force achieved.

It is to be noted that the feature of the Belleville washers could be incorporated into the assembly of the first and second embodiments if desired.

## Claims

1. A steering column assembly comprising a steering column shroud which supports a steering shaft for a steering wheel, the column shroud comprising an inner member (10) and an outer member (20), the inner member (10) being at least partially received within the outer member (20), a support bracket (40) which is fixed in position relative to a part of the vehicle, the outer member (20) passing between two spaced apart arms of the bracket (40), and a clamp assembly which includes a cam mechanism movable between a locked position in which the clamp assembly fixes the inner member (10) and outer member (20) in position relative to the support bracket (40) and an unlocked position in which the clamp assembly permits movement of at least one of the inner and outer members relative to the support bracket, and in which the clamp assembly includes a clamp pin (70) which passes through openings in each of the two arms of the bracket (40), the clamp pin (70) being provided with a first reaction member (110) located towards one end of the pin (70) outside of one arm of the support bracket (40) and a second reaction member (160) located towards the other end of the clamp pin (70) outside of the other arm of the support bracket (40) such that the arms of the bracket are clamped between the reaction members so as to provide a pre-load to the bracket arms, and in which both reaction members are prevented from rotating relative to the pin during use, and the second reaction member (160) is located at least partially within a cavity formed in a part of the cam mechanism, and a third reaction member (120) is provided which is located at the opposite end of the clamp pin (70) from the first reaction member and outside of the cam mechanism such that the clamp assembly is located between the third reaction member (120) and the first reaction member:

2. A steering column assembly according to claim 1 in which one of the reaction members comprises a nut which co-operates with the pin (70) through a threaded engagement such that the pin (70) prevents the reaction member from rotating relative to the pin (70).

3. A steering column assembly according to claim 1 or claim 2 in which the first reaction member (114) is fixed.

4. A steering column assembly according to claim 3 in which the second reaction member (160) within the cavity is adjustable and the first is fixed.

5. A steering column assembly according to claim 1 or claim 2 in which the second reaction member (160) within the cavity is fixed and the first is adjustable.

6. A steering column assembly according to claim 3, 4 or 5 in which the fixed reaction member comprises a circlip or is prevented from movement by way of engagement with a part of the assembly other than the pin (70).

7. A steering column assembly according to any preceding claim in which one of the reaction members comprises a nut having a stiff thread engagement.

8. A steering column assembly according to claim 7 in which the nut is provided with a nylon lining.

9. A steering column assembly according to any one of claims 6 to 8 in which a spring, such as a Bellville washer (300), is provided between the third reaction member (120) and the cam mechanism which determines at least in part the force required to rotate the handle.

10. A steering column according to any of claims 1 to 6 in which one of the reaction members comprises a nut having an external shape, the nut engaging a correspondingly-shaped recess in the cam mechanism.

11. A steering column according to claim 10 in which the shape is hexagonal.

12. A steering column assembly according to any preceding claim in which the inner (10) and outer (20) members are tubular.

13. A steering column assembly according to any preceding claim in which the bracket (40) is U shaped having a base from which the arms depend.

## Patentansprüche

1. Lenksäulenanordnung mit einer Lenksäulenummantelung, die eine Lenksäule für ein Lenkrad abstützt, wobei die Säulenummantelung ein inneres Bauteil (10) und ein äußeres Bauteil (20) aufweist, wobei das innere Bauteil (10) zumindest teilweise in dem äußeren Bauteil (20) aufgenommen ist, einem Halterungsbügel (40), der bezüglich eines Teils des Fahrzeugs ortsfest angeordnet ist, wobei das äußere Bauteil (20) zwischen zwei voneinander beabstandeten Armen des Bügels (40) verläuft, und einer Klemmanordnung, die einen Nockenmechanismus umfasst, der zwischen einer Schließstellung, in der die Klemmanordnung das innere Bauteil (10) und das äußere Bauteil (20) bezüglich des Halterungsbügels (40) an ort und Stelle festlegt, und einer geöffneten Stellung bewegbar ist, in der die Klemmanordnung eine Bewegung des inneren und/oder äußeren Bauteils bezüglich des Halterungsbügels zulässt, wobei die Klemmanordnung einen Klemmstift (70) aufweist, der durch Öffnungen in jedem der zwei Arme des Bügels (40) verläuft, wobei der Klemmstift (70) mit einem ersten Auflagerbauteil (110), das in Richtung eines Endes des Stifts (70) außerhalb eines Armes des Halterungsbügels (40) angeordnet ist, und einem zweiten Auflagerbauteil (160) versehen ist, das in Richtung des anderen Endes des Klemmstifts (70) außerhalb des anderen Arms des Halterungsbügels (40) so angeordnet ist, dass die Arme des Bügels zwischen den Auflagerbauteilen eingeklemmt sind, um den Bügelarmen eine Vorspannung zu verleihen, und wobei beide Auflagerbauteile im Gebrauch an einem Drehen relativ zu dem Stift gehindert sind, und wobei das zweite Auflagerbauteil (160) zumindest teilweise in einem Hohlraum angeordnet ist, der in einem Teil des Nockenmechanismus gebildet ist, und wobei ein drittes Auflagerbauteil (120) vorhanden ist, das an dem dem ersten Auflagerbauteil entgegengesetzten Ende des Klemmstifts (70) und außerhalb des Nockenmechanismus so angeordnet ist, dass die Klemmanordnung sich zwischen dem dritten Auflagerbauteil (120) und dem ersten Auflagerbauteil befindet.

2. Lenksäulenanordnung nach Anspruch 1, bei der eines der Auflagerbauteile eine Mutter aufweist, die durch einen Schraubeingriff mit dem Stift (70) zusammenwirkt, so dass der Stift (70) das Auflagerbauteil am Drehen bezüglich des Stifts (70) hindert.

3. Lenksäulenanordnung nach Anspruch 1 oder Anspruch 2, bei der das erste Auflagerbauteil (110) feststehend ist.

4. Lenksäulenanordnung nach Anspruch 3, bei der das zweite Auflagerbauteil (160) in dem Hohlraum einstellbar und das erste feststehend ist.

5. Lenksäulenanordnung nach Anspruch 1 oder Anspruch 2, bei der das zweite Auflagerbauteil (160) in dem Hohlraum feststehend ist und das erste einstellbar ist.

6. Lenksäulenanordnung nach Anspruch 3, 4 oder 5, bei der das feststehende Auflagerbauteil einen Sicherungsring aufweist oder an einer Bewegung durch einen Eingriff mit einem Teil der Anordnung abgesehen von dem Stift (70) gehindert ist.

7. Lenksäulenanordnung nach einem der vorhergehenden Ansprüche, bei der eines der Auflagerbauteile eine Mutter mit einem schwergängigen Schraubeingriff umfasst.

8. Lenksäulenanordnung nach Anspruch 7, bei der die Mutter mit einer Nylonbeschichtung versehen ist.

9. Lenksäulenanordnung nach einem der Ansprüche 6 bis 8, bei der eine Feder, wie etwa ein Sprengring (300), zwischen dem dritten Auflagerbauteil (120) und dem Nockenmechanismus vorgesehen ist, die zumindest teilweise die zum Drehen des Handgriffs notwendige Kraft festlegt.

10. Lenksäulenanordnung nach einem der Ansprüche 1 bis 6, bei der eines der Auflagerbauteile eine Mutter mit einer äußeren Form aufweist, wobei die Mutter in eine entsprechend geformte Ausnehmung in dem Nockenmechanismus eingreift.

11. Lenksäulenanordnung nach Anspruch 10, bei der die Form hexagonal ist.

12. Lenksäulenanordnung nach einem der vorhergehenden Ansprüche, bei der das innere (10) und äußere Auflagebauteil rohrförmig sind.

13. Lenksäulenanordnung nach einem der vorhergehenden Ansprüche, bei der der Bügel (40) U-förmig mit einer Basis ist, von der die Arme herabhängen.

## Revendications

1. Ensemble de colonne de direction comprenant un flasque de colonne de direction qui supporte un arbre de direction pour un volant, le flasque de colonne comprenant un élément interne (10) et un élément externe (20), l'élément interne (10) étant au moins partiellement reçu à l'intérieur de l'élément externe (20), une console de support (40) qui est fixée en position par rapport à une partie du véhicule, l'élément externe (20) passant entre deux bras espacés de la console (40), et un ensemble de serrage qui comprend un mécanisme de came mobile entre une position bloquée dans laquelle l'ensemble de serrage fixe l'élément interne (10) et l'élément externe (20) en position par rapport à la console de support (40) et une position débloquée dans laquelle l'ensemble de serrage permet le mouvement d'au moins l'un parmi les éléments interne et externe par rapport à la console de support, et dans lequel l'ensemble de serrage comprend une broche de serrage (70) qui passe à travers les ouvertures situées dans chacun des deux bras de la console (40), la broche de serrage (70) étant prévue avec un premier élément de réaction (110) positionné vers une extrémité de la broche (70) à l'extérieur d'un bras de la console de support (40) et un deuxième élément de réaction (160) positionné vers l'autre extrémité de la broche de serrage (70) à l'extérieur de l'autre bras de la console de support (40) de sorte que les bras de la console sont serrés entre les éléments de réaction afin de fournir une précharge aux bras de console, et dans lequel on empêche les deux éléments de réaction de tourner par rapport à la broche pendant l'utilisation, et le deuxième élément de réaction (160) est positionné au moins partiellement à l'intérieur d'une cavité formée dans une partie du mécanisme de came, et on prévoit un troisième élément de réaction (120) qui est positionné au niveau de l'extrémité opposée de la broche de serrage (70) par rapport au premier élément de réaction et à l'extérieur du mécanisme de came de sorte que l'ensemble de serrage est positionné entre le troisième élément de réaction (120) et le premier élément de réaction.

2. Ensemble de colonne de direction selon la revendication 1, dans lequel l'un des éléments de réaction comprend un écrou qui coopère avec la broche (70) par le biais d'une mise en prise filetée de sorte que la broche (70) empêche l'élément de réaction de tourner par rapport à la broche (70).

3. Ensemble de colonne de direction selon la revendication 1 ou la revendication 2, dans lequel le premier élément de réaction (110) est fixe.

4. Ensemble de colonne de direction selon la revendication 3, dans lequel le deuxième élément de réaction (160) à l'intérieur de la cavité est ajustable et le premier est fixe.

5. Ensemble de colonne de direction selon la revendication 1 ou la revendication 2, dans lequel le deuxième élément de réaction (160) à l'intérieur de la cavité est fixe et le premier est ajustable.

6. Ensemble de colonne de direction selon la revendication 3, 4 ou 5, dans lequel l'élément de réaction fixe comprend une attache ou on l'empêche de se déplacer au moyen de la mise en prise avec une partie de l'ensemble différente de la broche (70).

7. Ensemble de colonne de direction selon l'une quelconque des revendications précédentes, dans lequel l'un des éléments de réaction comprend un écrou ayant une mise en prise par filetage rigide.

8. Ensemble de colonne de direction selon la revendication 7, dans lequel l'écrou est prévu avec un revêtement en nylon.

9. Ensemble de colonne de direction selon l'une quelconque des revendications 6 à 8, dans lequel un ressort, tel qu'une bondelle Belleville (300), est prévu entre le troisième élément de réaction (120) et le mécanisme de came qui détermine au moins en partie la force requise pour faire tourner le guidon.

10. Colonne de direction selon l'une quelconque des revendications 1 à 6, dans laquelle l'un des éléments de réaction comprend un écrou ayant une forme externe, l'écrou mettant en prise un évidement formé de manière correspondante dans le mécanisme de came.

11. Colonne de direction selon la revendication 10, dans laquelle la forme est hexagonale.

12. Ensemble de colonne de direction selon l'une quelconque des revendications précédentes, dans lequel les éléments interne (10) et externe (20) sont tubulaires.

13. Ensemble de colonne de direction selon l'une quelconque des revendications précédentes, dans lequel la console (40) est en forme de U avec une base de laquelle les bras dépendent.
